# EUROPÄISCHE PATENTANMELDUNG

(11) **EP 3 723 249 A1**
(43) Veröffentlichungstag der Anmeldung: **14.10.2020**
(21) Anmeldenummer: 19168227.7
(22) Anmeldetag: 09.04.2019
(51) Int. Cl.: H02K 15/02

(54) **VERFAHREN ZUR FERTIGUNG EINES MAGNETBLECHS UND EINES MAGNETBLECHSTAPELS SOWIE ELEKTRISCHE MASCHINE UND ELEKTRISCHES FAHRZEUG**

(71) Anmelder: Siemens Aktiengesellschaft, 80333 München (DE)
(72) Erfinder: Schuh, Carsten, 85598 Baldham (DE); Vollmer, Rolf, 36129 Gersfeld (DE)

(57) **Zusammenfassung**

Bei dem Verfahren zur Fertigung eines Magnetblechs wird vorzugsweise ein nichtmagnetisches Blech mit flächiger Erstreckung herangezogen. Entlang der flächigen Erstreckung weist das Blech ausgenommene Bereiche auf, wobei diese Bereiche mittels additiver Fertigung eines weichmagnetischen Materials gefüllt werden. Das Material wird stoffschlüssig an das Blech angebunden.

## Beschreibung

Die Erfindung betrifft ein Verfahren zur Fertigung eines Magnetblechs und eines Magnetblechstapels sowie eine elektrische Maschine und ein elektrisches Fahrzeug.

Ein neues Verfahren zur Herstellung von Magnetblechen für elektrische Maschinen nutzt den Schablonendruck. Bei diesem Verfahren wird ausgehend von Metallpulvern zunächst eine Druckpaste erzeugt, welche dann mittels einer Schablonendrucktechnik zu einem Grünkörper in Gestalt einer Dickschicht verarbeitet wird. Anschließend wird dieser Grünkörper durch thermische Behandlung, das heißt mittels Entbinderung und Sinterung, in ein metallisches, strukturiertes Blech in Gestalt eines Magnetblechs überführt. Es ist bekannt, auch mehrkomponentige Magnetbleche auf diese Weise herzustellen. Dazu werden die verschiedenen Komponenten eines Magnetblechs sequenziell hintereinander auf eine Trägerplatte gedruckt und danach gemeinsam thermisch behandelt.

Jedoch können nicht sämtliche Werkstoffe bei diesem Verfahren zur Sinterung herangezogen werden. Insbesondere ist das Sintern von verzugfreiem und dichtem Sinterzeug auf diese Weise nur schwer zu realisieren.

Es ist daher Aufgabe der Erfindung, ein Verfahren zur Fertigung eines mehrkomponentigen Magnetblechs anzugeben, welches die eingangs erwähnten Nachteile überwindet. Ferner ist es Aufgabe der Erfindung, einen verbesserten Magnetblechstapel und eine verbesserte elektrische Maschine sowie ein verbessertes elektrisches Fahrzeug anzugeben.

Diese Aufgabe der Erfindung wird mit einem Verfahren zur Fertigung eines Magnetblechs mit den in Anspruch 1 angegebenen Merkmalen, mit einem Verfahren zur Fertigung eines Magnetblechstapels mit den in Anspruch 5 angegebenen Merkmalen, mit einem Magnetblechstapel mit den in Anspruch 8 angegebenen Merkmalen, mit einer elektrischen Maschine mit den in Anspruch 9 angegebenen Merkmalen sowie mit einem elektrischen Fahrzeug mit den in Anspruch 10 angegebenen Merkmalen gelöst. Bevorzugte Weiterbildung der Erfindung sind in den zugehörigen Unteransprüchen, der nachfolgenden Beschreibung und der Zeichnung angegeben.

Bei dem erfindungsgemäßen Verfahren zur Fertigung eines Magnetblechs wird ein, vorzugsweise nichtmagnetisches, Blech mit flächiger Erstreckung herangezogen. Es wird ein Blech herangezogen, welches entlang der flächigen Erstreckung ausgenommene Bereiche aufweist, wobei diese Bereiche mittels additiver Fertigung eines weichmagnetischen Materials gefüllt werden, welches stoffschlüssig an das Blech angebunden wird. Zweckmäßig wird das weichmagnetische Material bei oder infolge der additiven Fertigung stoffschlüssig an das Blech angebunden. Auf diese Weise lassen sich mehrkomponentige Magnetbleche auch mit solchen Komponenten herstellen, welche chemisch inkompatibel sind oder welche stark unterschiedliche Schwindungen bei Kosinterverfahren aufweisen. Weiterhin lassen sich mittels des erfindungsgemäßen Verfahrens auch mehrkomponentige Bleche aus solchen Komponenten fertigen, welche in einer kostengünstig herstellbaren und sinterfähigen Pulverform nicht verfügbar vorliegen. Ferner erlaubt das erfindungsgemäße Verfahren mehr Freiheitsgrade bei der Gestaltung von mehrkomponentigen Magnetblechen, da die Magnetbleche einfach stapelbar sind und gestapelte Magnetbleche nicht notwendigerweise identisch ausgebildet sein müssen. Insbesondere unterliegt das weichmagnetische Material bei einem Stapel von erfindungsgemäß gefertigten Magnetblechen keinerlei geometrischen Restriktionen bei dessen räumlicher Anordnung innerhalb dieses Stapels.

In einer bevorzugten Weiterbildung des erfindungsgemäßen Verfahrens erfolgt die additive Fertigung mittels Pulverauftragsschweißens und/oder mittels eines drahtbasierten Lichtbogens und/oder mittels *Cold Metal Transfers*, insbesondere laser- und/oder lichtbogenbasiert. Mittels der genannten Fertigungsverfahren lässt sich effizient und einfach additiv fertigen, wobei das additiv gefertigte Material mit dem Substrat, auf welchem das Material der additiven Fertigung aufgetragen wird, eine besonders stabile stoffschlüssige Verbindung eingeht. Auf diese Weise lässt sich folglich eine stoffschlüssige Verbindung des additiv gefertigten Materials mit dem Blech besonders leicht erreichen.

Alternativ oder zusätzlich und ebenfalls bevorzugt erfolgt die additive Fertigung mittels Druckens von partikelgefüllten Pasten. Auch auf diese Weise kann leicht eine stoffschlüssige Verbindung von additiv gefertigtem Material mit dem Blech erreicht werden.

Vorzugsweise wird bei dem erfindungsgemäßen Verfahren ein nichtmagnetisches Blech herangezogen, in dem zumindest ein Stanzteil und/oder ein Schneidteil, insbesondere ein Laserschneid- und/oder Siebdruckteil und/oder Schablonendruckteil als Blech herangezogen wird. Besonders bevorzugt wird bei dem erfindungsgemäßen Verfahren das Stanzteil und/oder Schneidteil, insbesondere das Laserschneidteil und/oder Sieb- und/oder Schablonendruckteil, in einem Verfahrensschritt des erfindungsgemäßen Verfahrens gefertigt. Das heißt vorzugsweise wird das Blech mittels Stanzens und/oder Schneidens und/oder Laserschneidens und/oder Siebdruckens gefertigt und für das weitere erfindungsgemäße Verfahren bereitgestellt. Auf diese Weise müssen das vorzugsweise nichtmagnetische Blech und das weichmagnetische Material nicht mittels derselben Fertigungstechniken gefertigt werden, sodass insbesondere unterschiedlich starke Schwindungsverläufe der verschiedenen Materialien der Fertigung des Magnetblechs mittels des erfindungsgemäßen Verfahrens nicht entgegenstehen. Geeigneterweise wird bei dem erfindungsgemäßen Verfahren an oder entlang zumindest einer flächigen Erstreckung des Magnetblechs ein elektrisches Isolationsmaterial angeordnet.

Besonders bevorzugt wird bei dem erfindungsgemäßen Verfahren nicht nur ein Magnetblech, sondern es werden mehrere Magnetbleche mittels des erfindungsgemäßen Verfahrens wie vorhergehend beschrieben gefertigt, wobei als zusätzlicher Verfahrensschritt die Magnetbleche gestapelt werden. In dieser Weiterbildung des erfindungsgemäßen Verfahrens wird also nicht lediglich ein einzelnes Magnetblech gefertigt, sondern es handelt sich um ein erfindungsgemäßes Verfahren zur Fertigung eines Magnetblechstapels. Mittels eines solchen Magnetblechstapels kann ein Rotor und/oder ein Stator einer elektrischen Maschine gefertigt werden, sodass das erfindungsgemäße Verfahren wie vorstehend beschrieben zur Fertigung einer elektrischen Maschine herangezogen werden kann.

Vorzugsweise werden bei dem erfindungsgemäßen Verfahren zur Fertigung eines Magnetblechstapels die Magnetbleche, bevor sie gestapelt werden, thermisch prozessiert, insbesondere getempert und/oder thermisch behandelt und/oder entbindert und/oder gesintert. Alternativ und ebenfalls bevorzugt werden die Magnetbleche, bevor sie gestapelt werden, gewalzt. Im Falle der thermischen Prozessierung können die Magnetbleche mittels Drucks von partikelgefüllten Pasten gefertigt werden. Mittels Temper- oder Nachglühprozessen lässt sich vorteilhaft die Mikrostruktur der Magnetbleche modifizieren. Insbesondere können Kornwachstum und/oder Interdiffusion an stoffschlüssigen Verbindungsstellen und/oder Texturierungen der Magnetbleche angepasst werden. Mittels Walzens der Magnetbleche lässt sich zudem eine homogene Blechdicke der Magnetbleche sowie eine homogene Oberfläche der Magnetbleche erzielen.

Der erfindungsgemäße Magnetblechstapel ist nach einem Verfahren wie vorhergehend beschrieben hergestellt. Erfindungsgemäß sind die Magnetbleche des Magnetblechstapels entlang einer Stapelrichtung einander folgend gestapelt, wobei diejenigen Bereiche, welche mittels additiver Fertigung mit weichmagnetischem Material gefüllt sind, vorzugsweise nicht notwendig sämtlich vollständig überlappen. In dieser Weiterbildung der Erfindung, in welchem die Bereiche, welche mittels additiver Fertigung mit weichmagnetischem Material gefüllt sind, nicht vollständig überlappen, können somit entlang der Stapelrichtung beliebige Geometrien weichmagnetischen Materials realisiert werden. Erfindungsgemäß lässt sich folglich die magnetische Struktur des Magnetblechstapels beliebig einstellen.

Die erfindungsgemäße elektrische Maschine weist einen Rotor und/oder Stator auf, welcher mit einem Magnetblechstapel wie vorstehend beschrieben und/oder mit einem erfindungsgemäßen Verfahren zur Fertigung eines Magnetblechstapels wie vorstehend beschrieben und/oder mit einem erfindungsgemäßen Verfahren zur Fertigung eines Magnetblechs wie vorstehend beschrieben gebildet ist.

Das erfindungsgemäße elektrische Fahrzeug ist mit einer solchen elektrischen Maschine wie vorstehend beschrieben gebildet.

Nachfolgend wird die Erfindung anhand eines in einer Zeichnung dargestellten Ausführungsbeispiels näher erläutert. Es zeigen:
- Figur 1: einen erfindungsgemäßen Magnetblechstapel schematisch in einer Draufsicht,
- Figur 2: den erfindungsgemäßen Magnetblechstapel gemäß Figur 1 schematisch im Querschnitt sowie
- Figur 3: ein erfindungsgemäßes elektrisches Fahrzeug mit einer erfindungsgemäßen elektrischen Maschine mit einem Rotor und einem Stator mit je einem erfindungsgemäßen Magnetblechstapel gem. Fig. 1 und 2 schematisch in einer Prinzipskizze.

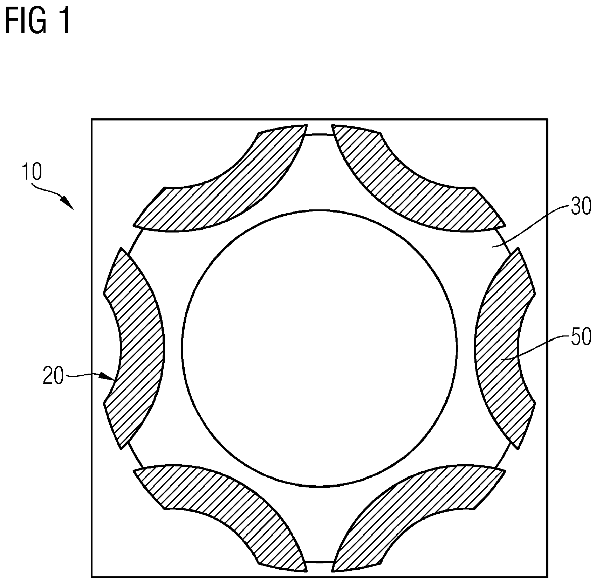

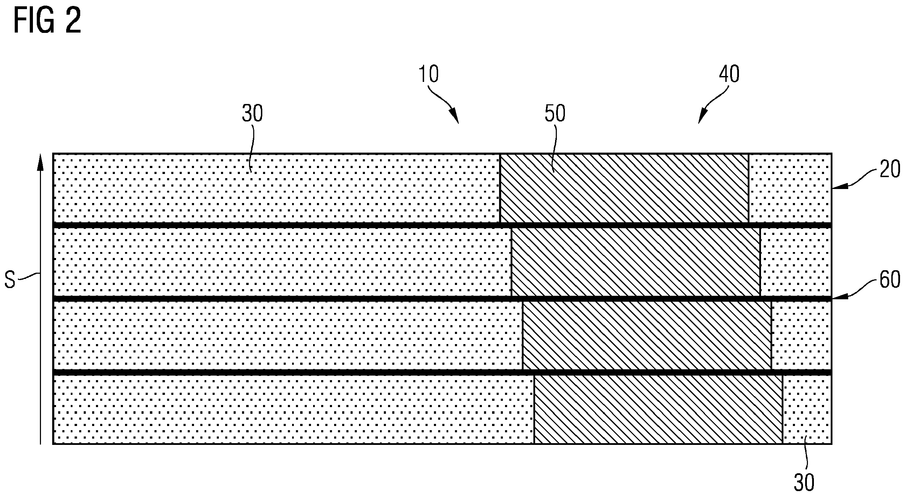

Der in den Figuren 1 und 2 dargestellte erfindungsgemäße Magnetblechstapel 10 ist erfindungsgemäß gefertigt und weist erfindungsgemäß gefertigte Magnetbleche 20 auf. Die Magnetbleche 20 umfassen jeweils ein vorgefertigtes nichtmagnetisches Metallblech 30, bei welchem in der flächigen Erstreckung ein Bereich 40 ausgenommen ist, der mit weichmagnetischem Material 50 gefüllt ist. Das weichmagnetische Material 50 ist im dargestellten Ausführungsbeispiel mittels Pulverauftragsschweißens in den Bereich 40 eingebracht, sodass das weichmagnetische Material 50 mit dem Blech 30 stoffschlüssig verbunden ist. Alternativ und in der Zeichnung nicht dargestellt kann das weichmagnetische Material 50 auch mittels eines drahtbasierten Lichtbogenschweißverfahrens und/oder mittels Cold Metal Transfers, insbesondere laserbasiert oder lichtbogenbasiert, additiv abgeschieden werden. In einem weiteren ebenfalls nicht gesondert gezeigten Ausführungsbeispiel wird weichmagnetisches Material additiv mittels Druckens von Pasten in den Bereich 40 eingebracht, welche Partikel weichmagnetischen Materials aufweisen.

Die Magnetbleche 20 weisen wie in Figur 2 dargestellt eine sich horizontal erstreckende flächige Erstreckung auf. Die Magnetbleche 20 sind in vertikaler Richtung, das heißt entlang einer vertikalen Stapelrichtung S, gestapelt. Der Bereich 40 weichmagnetischen Materials 50 überlappt sich bei aufeinanderfolgenden Magnetblechen 20 in Stapelrichtung S nicht vollständig: Vielmehr ist der Bereich 40 weichmagnetischen Materials 50 bei Fortschreiten in vertikaler Richtung in horizontaler Richtung, das heißt in Richtung der flächigen Erstreckung, versetzt. Das weichmagnetische Material 50 erstreckt sich folglich nicht entlang eines sich in Stapelrichtung fortstreckenden mathematischen Zylinders, sondern der Bereich des weichmagnetischen Materials 50 verläuft gegenüber der Stapelrichtung leicht geneigt. Die Magnetbleche 20 bilden den Magnetblechstapel 10 derart, dass die Magnetbleche 20, bevor sie gestapelt werden, gewalzt werden. Im Falle einer Bildung des weichmagnetischen Materials 50 mittels Druckens von partikelgefüllten Pasten werden die Magnetbleche 20 vor ihrer Zusammenführung zum Magnetblechstapel 10 zudem getempert und/oder thermisch behandelt und/oder entbindert und/oder gesintert. Vor dem Zusammenfügen zum Magnetblechstapel 10 werden die Magnetbleche 20 zusätzlich mit einer Isolationsschicht 60 versehen, welche auf die flächigen Erstreckungen der Magnetbleche 20 aufgetragen wird. Die Isolationsschicht 60 ist im dargestellten Ausführungsbeispiel ein Lack. Die Isolationsschicht 60 kann im weiteren Ausführungsbeispiel grundsätzlich auch auf andere Weise gebildet sein. Mittels der Isolationsschicht 60 sind die Magnetbleche 20 voneinander elektrisch isoliert. Die Magnetbleche 20 werden in Stapelrichtung S aufeinander gestapelt und bilden somit den erfindungsgemäßen Magnetblechstapel 10 aus.

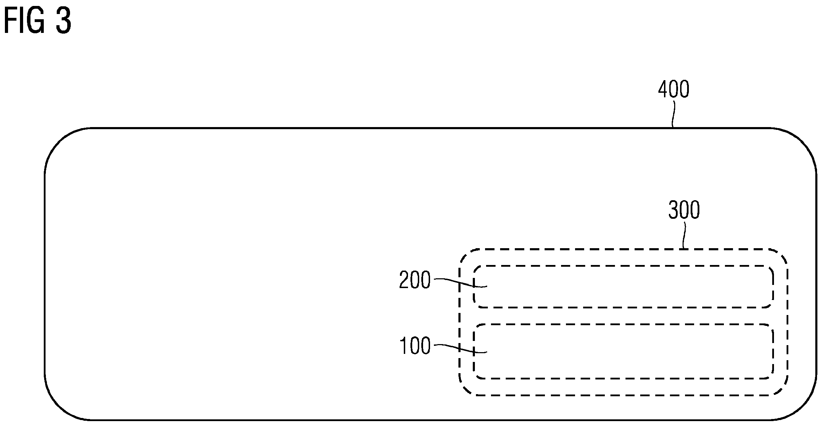

Die in Fig. 3 dargestellte erfindungsgemäße elektrische Maschine 300 weist einen Rotor 100 und einen Stator 200 auf, wobei sowohl der Rotor 100 als auch der Stator 200 mit einem erfindungsgemäßen Magnetblechstapel 10 wie zuvor beschrieben gebildet sind.

Das in Fig. 3 schematisch dargestellte elektrische Fahrzeug 400 ist beispielsweise ein hybridelektrisches Flugzeug und weist die zuvor beschriebene erfindungsgemäße elektrische Maschine 300 auf.

## Patentansprüche

1. Verfahren zur Fertigung eines Magnetblechs (20), bei welchem ein vorzugsweise nichtmagnetisches Blech (30) mit flächiger Erstreckung herangezogen wird, welches entlang der flächigen Erstreckung ausgenommene Bereiche (40) aufweist, wobei diese Bereiche (40) mittels additiver Fertigung eines weichmagnetischen Materials (50) gefüllt werden, welches stoffschlüssig an das Blech (30) angebunden wird.

2. Verfahren nach einem der vorhergehenden Ansprüche, bei welchem die additive Fertigung mittels Pulverauftragsschweißens und/oder mittels eines drahtbasierten Lichtbogens und/oder mittels Cold Metal Transfers, insbesondere laserbasiert und/oder lichtbogenbasiert, und/oder mittels Druckens von partikelgefüllten Pasten erfolgt.

3. Verfahren nach einem der vorhergehenden Ansprüche, bei welchem ein nichtmagnetisches Blech (30) herangezogen wird, in dem zumindest ein Stanzteil und/oder ein Schneidteil, insbesondere ein Laserschneidteil, und/oder ein Sieb- und/oder Schablonendruckteil herangezogen und/oder gefertigt wird.

4. Verfahren nach einem der vorhergehenden Ansprüche, bei welchem an das Magnetblech (20) an oder entlang zumindest einer flächigen Erstreckung des Magnetblechs (20) ein elektrisches Isolationsmaterial (60) angeordnet wird.

5. Verfahren zur Fertigung eines Magnetblechstapels (10), bei welchem mehrere Magnetbleche (20) mit einem Verfahren nach einem der vorhergehenden Ansprüche gefertigt werden, und bei welchem die Magnetbleche (20) gestapelt werden.

6. Verfahren nach einem der vorhergehenden Ansprüche, bei welchem die Magnetbleche (20), bevor sie gestapelt werden, getempert und/oder thermisch behandelt und/oder entbindert und/oder gesintert werden.

7. Verfahren nach einem der vorhergehenden Ansprüche, bei welchem die Magnetbleche (20), bevor sie gestapelt werden, gewalzt werden.

8. Magnetblechstapel, hergestellt nach einem Verfahren nach einem der vorhergehenden Ansprüche, bei welchem die Magnetbleche (20) entlang einer Stapelrichtung (S) einander folgend gestapelt sind, wobei vorzugsweise die Bereiche (40), welche mittels additiver Fertigung mit weichmagnetischem Material (50) gefüllt sind, nicht sämtlich vollständig überlappen.

9. Elektrische Maschine mit einem Rotor (100) und/oder Stator (200), welcher mit einem Magnetblechstapel (10) nach einem der vorhergehenden Ansprüche und/oder mit einem Verfahren nach einem der vorhergehenden Ansprüche gebildet ist.

10. Elektrisches Fahrzeug mit einer elektrischen Maschine (300) nach dem vorhergehenden Anspruch.
